# EUROPEAN PATENT APPLICATION

(11) **EP 2 129 153 A1**
(43) Date of publication of application: **02.12.2009**
(21) Application number: 08720463.2
(22) Date of filing: 13.03.2008
(51) Int. Cl.: H04Q 7/38, H04L 12/56

(54) **OVERLAY NETWORK NODE AND MOBILE NODE**

(30) Priority: 19.03.2007 JP 2007071360; 30.05.2007 JP 2007143715
(71) Applicant: Panasonic Corporation, Kadoma-shi Osaka 571-8501 (JP)
(72) Inventor: JUN, Hirano, Osaka-shi, Osaka 540-6207 (JP); TIEN MING, Benjamin Koh, Singapore 534415 (JP)
(74) Representative: Grünecker, Kinkeldey, Stockmair & Schwanhäusser Anwaltssozietät
(86) International application number: PCT/JP2008/000577
(87) International publication number: WO 2008/114498

(57) **Abstract**

A technology is disclosed for appropriately providing a certain service desired by a mobile node, even in an environment including overlay network nodes providing different functions. In the technology, a mobile node (MN) 110 implements Monami6 protocol and transmits a binding update message requesting a service based on the Monami6 protocol. On the other hand, an overlay network is present on a network, the overlay network in which a home agent (MCHA) implementing the Monami6 protocol and a home agent (MSHA) not implementing the Monami6 protocol cooperate to provide functions of an HA. In this instance, for example, an MSHA 150 that receives a message from the mobile node via a path 112 sends the request to an MCHA implementing the Monami6 protocol (such as an MCHA 130) and makes the MCHA process the request.

## Description

### TECHNICAL FIELD

The present invention relates to an overlay network node and a mobile node. The overlay network node functions as a node in an overlay network that abstracts a packet exchange type data communication network, such as an internet protocol (IP) network.

### BACKGROUND ART

At present, maintaining connectivity to the Internet during movement is becoming an important requirement by users. In particular, a state is desired in which a user can be constantly connected to the Internet, regardless of the location to which the user moves. An IP address is required to be changed when the user moves between networks. Issues related to this address change are resolved through the introduction of mobile IP.

In Mobile Nodes and Multiple Interfaces in IPv6 (Monami6) working group of the Internet Engineering Task Force (IETF), discussions are being conducted to provide a function to a multi-interface mobile node to allow characteristics of the multi-interface node to be sufficiently utilized.

The multi-interface mobile node can register to a home agent, a plurality of care-of addresses acquired through the interfaces. As a result of the plurality of care-of addresses being registered, the home agent can know that the mobile node can be reached by a plurality of routes.

Through actualization of this technology, the mobile node can specify from where to receive a data packet. The mobile node can also prescribe a rule regarding a data packet stream (referred to as flow), specifying a care-of address serving as the destination to which the data packet should be transmitted.

In IETF, discussions are being conducted in parallel to provide a technique for optimizing the transmission path of a data packet, in accompaniment with the movement of the mobile node using the mobile IP. Optimization is performed in adherence to various levels and various formats. For example, optimization of an end-to-end between a transmitter and a receiver has already been discussed in the basic standards of the mobile IP. On the other hand, discussions are being conducted in the various working groups of the IETF regarding, for example, optimization between a mobile router or a mobile node, and a home agent.

In Non-patent Document 1, below, a technique (referred to as global HAHA) is proposed related to optimization performed within an overlay network. In the technique proposed in Non-patent Document 1, route optimization transparent to an end user can be actualized using a network of cooperating routers disposed such as to be distributed geographically.

First, a mobile node of a user registers binding information to a home agent. The home agent distributes the binding information to other home agents within an overlay network, the home agents disposed such as to be distributed geographically. As a result, the other home agents can also function as a proxy home agent of the mobile node.

Data packets transmitted from and received by the mobile node are intercepted by a proxy home agent nearest to a transmitting source node. After the data packet is encapsulated or decapsulated, the data packet is tunneled to another proxy home agent nearest to the destination node. In this way, in contrast to a path in which a data packet reaches the destination node from the transmitting source node via the original home agent (the home agent to which the mobile node has registered the binding information), the path of the data packet is optimized between the transmitting source node and the destination node.

In Patent Document 1, below, a technology is disclosed in which, in a system configured by a home agent, and controllers and backup devices of the home agent, information held by the home agent is multicast to all controllers and backup devices (backup home agents), allowing operation to be seamlessly switched to the backup home agents.

In Patent Document 2, below, a method is described in which a client is transparently registered to a plurality of home agents through use of virtual home agent addresses. Here, a synchronization process for information between home agents using a "heartbeat" message system, and a synchronization process for multicast information are performed.
Patent Document 1: US Patent No. 7080151
Patent Document 2: US Patent No. 6430698
Non-patent Document 1: P. Thubert, et al., "Global HA to HA protocol", Internet Engineering Task Force Internet Draft: draft-thubert-nemo-global-haha-01.txt, Work-In-Progress, 15 Oct 2005

However, the range of the overlay network is limited. For example, in an overlay network of a range and scale requiring the overlay network to cross country borders and continents, it is thought that the overlay network will actually be realized through cooperation among numerous service providers.

On the other hand, because each provider in each region differs from the other, it is expected that respective functions of the overlay network nodes forming the overlay network will not match. For example, service providers may emerge who chose not to implement a certain protocol (such as a Monami6 protocol stack) for various reasons, such as the protocol not being sufficiently established or the cost of licensing to implement the protocol.

When a legacy home agent that does not provide Monami6 function is present within the overlay network, a problem occurs when a service subscriber trying to receive Monami6 function service is require to pay consideration for operation of a node having a plurality of interfaces. In a situation such as this, a data stream passing through the legacy home agent cannot be filtered as desired by the user, and is precariously processed by a pre-existing entry installed in the legacy home agent. In other words, a problem occurs in that the Monami6 function service is not adequately provided to the service subscriber wishing to receive the Monami6 function service. Various methods related to operations for optimizing the overlay network are currently known. However, solutions have not been found for problems occurring in a situation such as that described above, in which overlay network nodes providing different functions are present.

The technology described in Patent Document 1 is advantageous for operation of the overlay network. However, a problem exists in that a home agent providing a different capability cannot be operated while guarantee of service to the subscriber is maintained.

In the technology disclosed in Patent Document 2, as well, a problem exists in that a clear solution has not been found for a situation in which functions of a supported protocol differ between home agents.

### DISCLOSURE OF THE INVENTION

To solve the above-described issues, an object of the present invention is to provide an overlay network node and a mobile node that allows a certain service desired by the mobile node to be appropriately provided, even in an environment including overlay network nodes providing different functions, such as where different internet service providers cooperate to form an overlay network.

To achieve the above-described object, an overlay network node of the present invention is an overlay network node belonging to an overlay network formed on top of a predetermined network and providing a function related to a certain overlay network service. The overlay network node includes an identifying means for identifying a mobile node desiring a service not supported by the overlay network node. The overlay network node also includes transferring means. To enable a certain overlay network node supporting the service desired by the mobile node to provide the mobile node with the service, the transferring means transfers information from the mobile node requesting the service and a data packet destined for the mobile node to the certain overlay network node supporting the service.
As a result of the configuration, a certain service desired by a mobile node can be appropriately provided to the mobile node even in an environment including overlay network nodes providing different functions.

In addition to the above-described configuration, in the overlay network node of the present invention, the service desired by the mobile node is any of registration of a plurality of care-of addresses, registration of a flow filtering rule, and an operation based on Monami6 protocol.
As a result of the configuration, each service, such as registration of a plurality of care-of addresses, registration of a flow filtering rule, and an operation based on Monami6 protocol, can be appropriately provided to the mobile node even in an environment including overlay network nodes providing different functions.

In addition to the above-described configuration, the overlay network node of the present invention includes an information storage means for associating information related to the mobile node desiring the service stating that the mobile node desires the service with identifying information of the certain overlay network node, and storing the associated pieces of information.
As a result of the configuration, the overlay network node can accurately identify the mobile node and request the certain overlay network node to provide service to the mobile node.

In addition to the above-described configuration, in the overlay network node of the present invention, when a request for the service is directly received from the mobile node desiring the service, the transferring means transfers the request to the certain overlay network node.
As a result of the configuration, the request for service received from the mobile node can be sent with certainty to the certain overlay network node that can provide the service.

In addition to the above-described configuration, the overlay network node of the present invention includes a process judging means. When a data packet destined for the mobile node desiring the service is received, the process judging means judges whether the data packet has been processed by an arbitrary overlay network node supporting the service. When the data packet has been processed by an arbitrary overlay network node supporting the service, the transferring means transfers the data packet to the mobile node. On the other hand, when the data packet has not been processed by an arbitrary overlay network node supporting the service, the transferring means transfers the data packet to the certain overlay network node.
As a result of the configuration, when the service desired by the mobile node is not yet provided to a data packet destined for the home node, the data packet can be set with certainty to the certain overlay network node that can provide the service.

In addition to the above-described configuration, the overlay network node of the present invention includes a rule checking means.
When a data packet destined for the mobile node desiring the service is received, the rule checking means checks whether a flow filtering rule related to the data packet is present. When a flow filtering rule related to the data packet is present, the transferring means transfers the data packet based on the flow filtering rule.
As a result of the configuration, the overlay network node can perform packet transfer of a packet to be transferred, in a manner based on the flow filtering rule. Therefore, packet transfer to the certain overlay network node supporting the service is not performed, thereby conserving network resources.

To achieve the above-described obj ect, an overlay network node of the present invention is an overlay network node belonging to an overlay network formed on top of a predetermined network and providing a function related to a certain overlay network service. The overlay network node includes a service providing means for providing a certain service. The overlay network node also includes a service providing state switching means for switching between a state in which the certain service is provided and a state in which the certain service is not provided. The overlay network node also includes an identifying means for identifying a mobile node desiring the service. The overlay network node also includes a transferring means. In the state in which the certain service is not provided, to enable a certain overlay network node supporting the service desired by the mobile node to provide the mobile node with the service, the transferring means transfers information from the mobile node requesting the service and a data packet destined for the mobile node to the certain overlay network node supporting the service.
As a result of the configuration, a certain service desired by a mobile node can be appropriately provided to the mobile node even in an environment including overlay network nodes providing different functions. In particular, whether the overlay network node provides the certain service can be switched based on a policy of some sort. As a result of the above-described configuration, the certain service desired by the mobile node can be appropriately provided to the mobile node, even when the overlay network node is not providing the certain service.

In addition to the above-described configuration, the overlay network node of the present invention includes a list updating means. When the service providing state switching means switches the state, the list updating means updates a list of overlay network nodes supporting the service, shared within the overlay network, in adherence to the switching of the state. As a result of the configuration, the service providing state in the overlay network can be indicated in the list of overlay network nodes supporting the service. The list is under centralized management or distributed management in the overlay network.

In addition to the above-described configuration, in the overlay network node of the present invention, the list updating means transmits an update message indicating that the overlay network is to be added to or removed from the list, in adherence to the switching of the state.
As a result of the configuration, the list can be updated by an update message being transmitted when the overlay network node switches the service providing state.

In addition to the above-described configuration, the overlay network node of the present invention includes a service judging means for judging whether the mobile node can appropriately receive the service. The overlay network node also includes a notification message generating means. When the service judging means judges that the service cannot be appropriately received, the notification message generating means generates a notification message indicating that the mobile node cannot appropriately receive the service. The overlay network node also includes a notification message transmitting means for transmitting the notification message to the mobile node.
As a result of the configuration, the mobile node is notified of a sate in which the mobile node cannot appropriately receive the certain service.

In addition to the above-described configuration, in the overlay network node of the present invention, the notification message generating section inserts information used to enable the mobile node to appropriately receive the service into the notification message.
As a result of the configuration, the mobile node can be notified of information enabling the service to be more appropriately received.

To achieve the above-described object, a mobile node of the present invention is a mobile node that is connected to a network and performs communication using a function related to a certain overlay network service provided by an overlay network formed on top of the network. The mobile node includes a service requesting means for making a request to the network for use of the function related to the certain overlay network service. The mobile node also includes a notification message receiving means for receiving a notification message from the network stating that the overlay network service cannot be appropriately received. The mobile node also includes a service usage changing means for changing a method by which the overlay network service is received when the notification message is received.
As a result of the configuration, the mobile node is notified of a state in which the mobile node cannot appropriately receive the certain service. The mobile node can change the method by which the service is received.

In addition to the above-described configuration, the mobile node of the present invention includes a plurality of interfaces used to connect to the network. The service usage changing means switches the interface used to connect to the network.
As a result of the configuration, the mobile node can switch the interface used to receive the service such that the service can be appropriately received.

In addition to the above-described configuration, in the mobile node of the present invention, interface-type information is included in the notification message as information used to enable the overlay network service to be appropriately received. The service usage changing means switches the interface used to connect to the network based on the interface-type information.
As a result of the configuration, the mobile node is notified of the interface-type information used to enable the service to be more appropriately received. The mobile node can switch the interface used to receive the service, based on the interface-type information.

The present invention has the above-described configuration. The present invention achieves an effect in which a certain service desired by a mobile node can be appropriately provided, even in an environment including overlay network nodes providing different functions, such as where different internet service providers cooperate to form an overlay network.

### BRIEF DESCRIPTION OF THE DRAWINGS

Fig. 1 is a diagram of an example of a network configuration according to an embodiment of the present invention;
Fig. 2 is a diagram of an example of information elements added to a binding cache entry held by an MSHA according to the embodiment of the present invention;
Fig. 3 is a block diagram of an example of a configuration actualizing functions required of the MSHA according to the embodiment of the present invention;
Fig. 4 is a block diagram of another example of the configuration actualizing functions required of the MSHA according to the embodiment of the present invention;
Fig. 5 is a flowchart of an example of operations performed by the MSHA according to the embodiment of the present invention;
Fig. 6 is a flowchart of an example of operations performed by an MSHA according to another embodiment of the present invention;
Fig. 7 is a block diagram of another example of a configuration actualizing functions required of an MSHA according to still another embodiment of the present invention;
Fig. 8 is a diagram of an example of information elements included in an update message transmitted from the MSHA according to still another embodiment of the present invention;
Fig. 9 is a diagram of an example of information elements included in a notification message transmitted from an MSHA according to still further another embodiment of the present invention;
Fig. 10 is a flowchart of an example of operations performed by the MSHA according to still further another embodiment of the present invention; and
Fig. 11 is a schematic diagram of extended functions of an MN according to still further another embodiment of the present invention.

### BEST MODE FOR CARRYING OUT THE INVENTION

Embodiments of the present invention will hereinafter be described with reference to the drawings.

The present invention provides an enhanced home agent that, while supporting Monami6, does not fully implement the Monami6 function, to allow service providers to participate and interact in an overlay network that supports the Monami6 function but does not fully implement the Monami6 protocol.

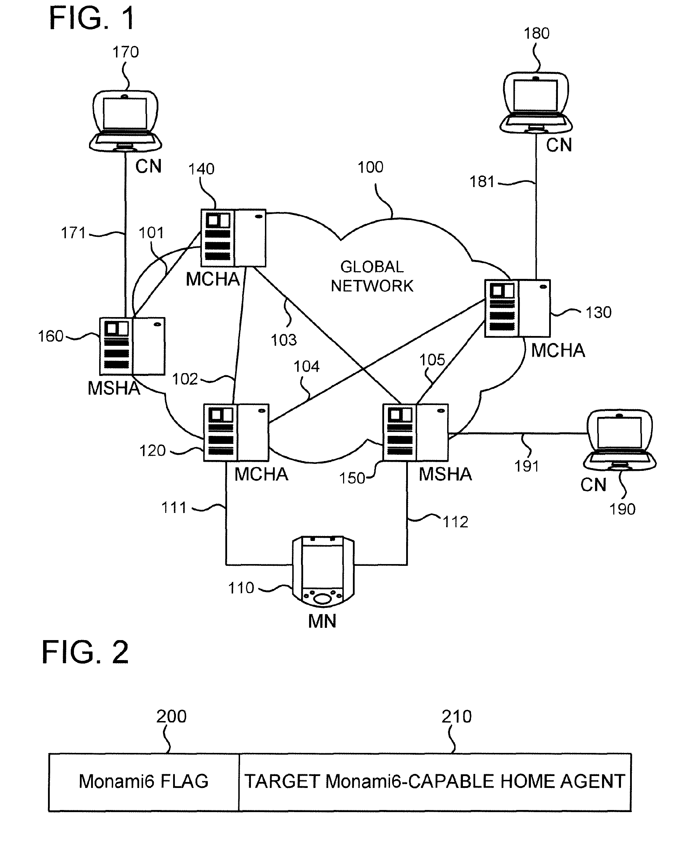

First, an example of a configuration of an overlay network premised in the present invention will be described with reference to Fig. 1. In a network configuration shown in Fig. 1, a mobile node (MN) 110 subscribes to an overlay network service. The overlay network comprises of a plurality of home agents (an MCHA 120, an MCHA 130, an MCHA 140, an MSHA 150, and an MSHA 160).

A Monami6-capable home agent (MCHA) is a home agent that implements a complete Monami6 protocol stack including, for example, a registration function for a plurality of care-of addresses and a filtering function for data flow, in addition to an overlay network optimizing function.

On the other hand, a Monami6-Support home agent (MSHA) is a home agent that provides only the overlay network optimizing function, but can support operation of Monami6 using a solution method of the present invention.

In Fig. 1, the mobile node 110 receives data streams from three correspondent nodes (CN), a CN 170, a CN 180, and a CN 190. The mobile node 110 can register interfaces that use a path 111 and a path 112, using the Monami6 protocol stack. Moreover, the mobile node 110 can specify transfer methods used for the data streams from the CN 170, the CN 180, and the CN 190.

In a conventional technology, for example, when the MSHA 150 and the MSHA 160 shown in Fig. 1 are legacy home agents (in other words, home agents that cannot understand Monami6 at all are present where the MSHA 150 and the MSHA 160 are set), the legacy home agents cannot register the plurality of care-of addresses. Therefore, the legacy home agents cannot configure a binding cache including a plurality of entries related to the mobile node 110.

For example, even when an update reported over the overlay network includes a plurality of care-of addresses, the legacy home agents may possibly perform an operation based on normal mobile IP and simply register a value included in a first option as a current care-of address of the mobile node 110.

Moreover, because the legacy home agents do not know to send a data packet to the mobile node 110 using a different path, the legacy home agents cannot understand flow filtering rules set by the mobile node 110 and cannot operate in adherence to the flow filtering rules from the mobile node 110.

For example, when the MSHA 150 only functions as a legacy home agent and a data stream from the CN 190 passes through this legacy home agent, even when the MN 110 sets a flow filtering rule for the data stream to be received via the path 111, the legacy home agent simply transmits the data stream via the shortest path 112. The flow filtering rule set by the MN 110 is ignored.

On the other hand, in the present invention, home agents other than the MCHA that can be present within the overlay network (the legacy home agents in the conventional technology) are the MSHA that can at least understand the Monami6 function. The MSHA can correctly handle a packet destined for a mobile node registered for a service (Monami6 service) related to the Monami6 function.

For example, although the MSHA does not register the plurality of care-of addresses, the MSHA marks an additional field in the binding cache entry of the mobile node requesting the Monami6 service and sends the data packet destined for the mobile node to the appropriate MCHA, thereby enabling further processing by the MCHA (normal processing related to the Monami6 function). Regarding packets not transmitted or transferred from an MCHA (packets not processed by an MCHA), the MSHA preferably performs the above-describe process on all packets destined for the mobile node.

For example, in the network configuration shown in Fig. 1, the MSHA 150 receives a Monami6 binding update message from the MN 110 via the path 112. In this instance, the MSHA 150 first updates the binding cache in adherence with mobile IPv6 (MIPv6). Then, the MSHA 150 is required to add a flag to the binding cache entry, identifying the MN 110 requesting the Monami6 service. In addition, an MCHA functioning for the MN 110 (namely an MCHA performing packet processing related to Monami6) is preferably written. The potential MCHA in each binding cache entry can be the same or different. The potential MCHA can be statically assigned or dynamically assigned to each binding entry. Moreover, the potential MCHA can be selected, for example, to achieve the shortest packet transfer path, or set based on other arbitrary policies.

Fig. 2 is a diagram of information elements added to the binding cache entry in the MSHA. In the present invention, for example, a Monami6 flag field 200 and a target Monami6-capable home agent field 210 are added to the binding cache entry. In the Monami6 flag field 200, a value is set indicating whether the mobile node related to the binding cache entry is requesting the Monami6 service.
In the target Monami6-capable home agent field 210, identifying information of an MCHA serving as a transfer destination for a packet related to the mobile node related to the binding cache entry is set.

For example, when the MSHA 150 receives a Monami6 binding update message from the MN 110 via the path 112, the MSHA 150 updates the binding cache. Then, the MSHA 150 transfers the entire binding update message to the MCHA (such as the MCHA 130) written in the target Monami6-capable home agent field 210 of the binding cache entry related to the MN 110. Therefore, the MSHA 150 transfers the binding update to the MCHA 130 via a path 105. The MCHA 130 performs further processing.

When the MCHA 130 receives the binding update message of the MN 110, the MCHA 130 performs a normal process related to each function of MIPv6, Monami6, the overlay network protocol, and the like.

The MSHA 160 also receives a Monami6 binding update message generated by the MN 110 via the overlay network. At this time, the format can be changed to a format suitable for the protocol implemented in the overlay network.

In this way, the binding update message from the MN 110 is required to be distributed to the home agents belonging to the overlay network. It is preferable that the MSHA 160 can know that the binding update message has already been processed by a Monami6-capable overlay network node.

The MSHA 160, for example, updates the binding cache in a similar manner as the MSHA 150. The MSHA 160 sets the MCHA 140 as the target Monami6-capable home agent processing the flow of the MN 110. In other words, the MSHA 160 performs an update in the binding cache entry related to the MN 110 to write the MCHA 140 in the target Monami6-capable home agent field 210. In addition, the MSHA 160 prevents the binding update message from being retransferred to the MCHA 140, unless a request is made by another protocol. As a result, the binding update message transferred from an MSHA to an MCHA can be prevented from undergoing redundant processing by the MCHA.

In other words, when the binding update message is received directly from the MN, the binding update message is required to be correctly interpreted by the target Monami6-capable home agent. However, when the binding update message is received via the overlay network, it can be assumed that the binding update message has already been appropriately interpreted by a Monami6-capable home agent. Therefore, the binding update message is not required to be reinterpreted by the target Monami6-capable home agent. Thus, the MSHA is not required to transfer the binding update message received via the overlay network to the MCHA.

When a packet destined for the MN 110 reaches the MSHA 160 from the CN 170 via a path 171, the MSHA 160 checks the binding cache and references the entry related to the MN 110. When the MSHA 160 finds that the MN 110 is requesting the Monami6 service, the MSHA 160 transfers the packet to the MCHA 140 written in the target Monami6-capable home agent field 210 present in the binding cache entry of the MN 110.

When the MCHA 140 receives the packet from the CN 170 destined for the MN 110, the MCHA 140 transfers the packet to the destination based on the flow filtering rule set by the MN 110. In other words, the packet from the CN 170 destined for the MN 110 is transferred from the MCHA 160 that cannot perform processing based on the flow filtering rule to the MCHA 140 that can perform processing based on the flow filtering rule. The flow filtering rule is then applied to the packet by the MCHA 140.

When a packet destined for the MN 110 reaches the MCHA 130 from the CN 180 via a path 181, the MCHA 130 uses the flow filtering rule set by the MN 110 and transfers the packet to the destination. For example, when the MN 110 requests that the packet from the CN 180 be transferred via the path 112, the MCHA 130 tunnels the packet to the MSHA 150.

When the MSHA 150 decapsulates the packet, the MSHA 150 realizes that the destination of the packet is the MN 110 requesting the Monami6 service. However, because the original packet has arrived by being tunneled from a Monami6-capable home agent (MCHA 130), processing based on the flow filtering rule has already been performed by the MCHA 130. Therefore, the MSHA 150 transfers the packet to the MN 110 via the path 112, in a normal manner. Here, the transmission source of the tunneled packet is the same as the certain home agent (MCHA 130) written in the target Monami6-capable home agent field 210. However, the home agents are not necessarily required to be the same. The tunnel transmission source is merely required to be a Monami6-capable node.

When a packet destined for the MN 110 reaches the MSHA 150 from the CN 190 via a path 191, the MSHA 150 checks the binding cache and references the entry related to the MN 110. When the MSHA 150 finds that the MN 110 is requesting the Monami6 service, the MSHA 150 transfers the packet to the MCHA 130 written in the target Monami6-capable home agent field 210 present in the binding cache entry of the MN 110.

When the MCHA 130 receives the packet from the CN 190 destined for the MN 110, the MCHA 130 uses the flow filtering rule set by the MN 110 and transfers the packet to the correct destination. Here, an instance is considered in which the MN 110 sets a transfer such that the packet from the CN 190 is transmitted via the path 112, and the MCHA 130 tunnels the packet to the MSHA 150.

When the MSHA 150 decapsulates the packet, the MSHA 150 realizes that the destination of the packet is the MN 110 requesting the Monami6 service. However, because the original packet has arrived by being tunneled from a Monami6-capable home agent (MCHA 130), the MSHA 150 transfers the packet to the MN 110 via the path 112, in a normal manner.

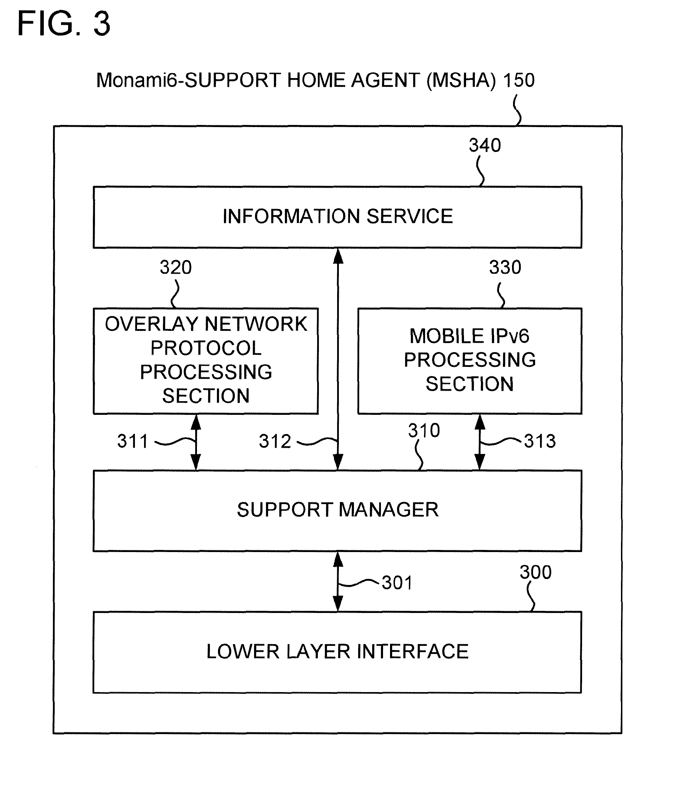

Fig. 3 is a diagram of an example of a configuration actualizing functions required of the MSHA 150 according to the embodiment of the present invention. The MSHA 150 shown in Fig. 3 includes a lower layer interface 300, a support manager 310, an overlay network protocol processing section 320, a mobile IPv6 processing section 330, and an information service 340.

The lower layer interface 300 includes physical network access hardware, a driver, and a software application programming interface (API). The lower layer interface 300 sends all packets to be processed by the overlay network protocol processing section 320 and the mobile IPv6 processing section 330 to the support manager 310 via a path 301.

The support manager 310 performs operations required in the present invention. When a mobile IPv6 binding update message is received, the support manager 310 checks the message and judges whether an element related to the Monami6 function is included. When an element related to the Monami6 function is included, the support manager 310 extracts related information, such as a plurality of care-of addresses and flow filtering rules. The support manager 310 then sends the message to the mobile IPv6 processing section 330 via a path 313. The mobile IPv6 processing section 330 performs normal processing.

The support manager 310 also updates the Monami6 flag field 200 and the target Monami6-capable home agent field 210 of the related binding cache entry using the extracted information. The binding cache entry can be shared with the mobile IPv6 processing section 330. However, in this instance, measures are required to be taken to prevent data loss and tampering resulting from data synchronization related to mobile IPv6 operation.

The support manager 310 also makes a query to the information service 340 via a path 312. For example, the support manager 310 makes a query to the information service 340 when selecting the target Monami6-capable home agent. A binding update message received from the mobile node is required to be transferred to the MCHA written in the target Monami6-capable home agent field 210. When the overlay network protocol processing section 210 does not perform update related to the information included in the binding update message, the MSHA sends the message to a related protocol stack. Normal process is performed in the related protocol stack.

The information service 340 is an entity that can provide various pieces of information including information required in the present invention. The information service 340 can be disposed within the MSHA 140 as shown in Fig. 3. Alternatively, the information service 340 can be disposed in a remote location.

When a data packet destined for the mobile node is received, the support manager 310 checks whether the packet has been transmitted or tunneled from an MCHA. When the packet has been transmitted or tunneled from the MCHA, the support manager 310 sends the packet to the related protocol stack. For example, the packet is sent to the overlay network protocol processing section 320 via a path 311 or the mobile IPv6 processing section 330 via the path 313. Normal processing is then performed.

On the other hand, when the packet transmitting source or the tunnel transmission source is not the MCHA, the support manager 310 is required to check the binding cache (for example, check the value in the Monami6 flag field 200) and judge whether the mobile node (destination of the packet) is requesting the Monami6 service. When the mobile node is requesting the Monami6 service, the support manager 310 is required to transfer the packet to the MCHA written in the target Monami6-capable home agent field 210.

On the other hand, when the mobile node is not requesting the Monami6 service, the support manager 310 sends the packet to the related protocol stack. Normal processing is then performed. Information related to whether the packet transmitting source or the tunnel transmission source is the MCHA can be obtained through a query made to the information service 340 via the path 312.

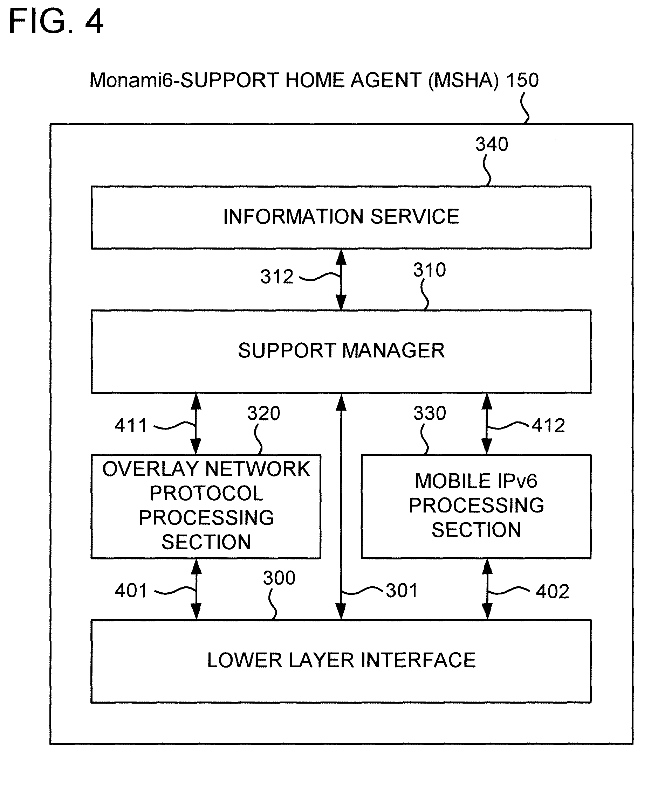

Fig. 4 is a diagram of an example of another configuration actualizing the functions required of the MSHA 150 according to the embodiment of the present invention. In the configuration shown in Fig. 4, the support manager 310 is positioned above protocols of both the overlay network protocol processing section 320 and the mobile IPv6 processing section 330. Functions are similar to those described above. However, the support manager 310 is required to be registered to the overlay network protocol processing section 320 and the mobile IPc6 processing section 330 to allow the support manager 310 to receive the messages unique to the present invention.

The support manager 310, the overlay network protocol processing section 320, and the mobile IPv6 processing section 330 can be placed arbitrarily. In other words, for example, the support manager 310 can be placed above the mobile IPv6 processing section 330 and below the overlay network protocol processing section 320, and vice versa.

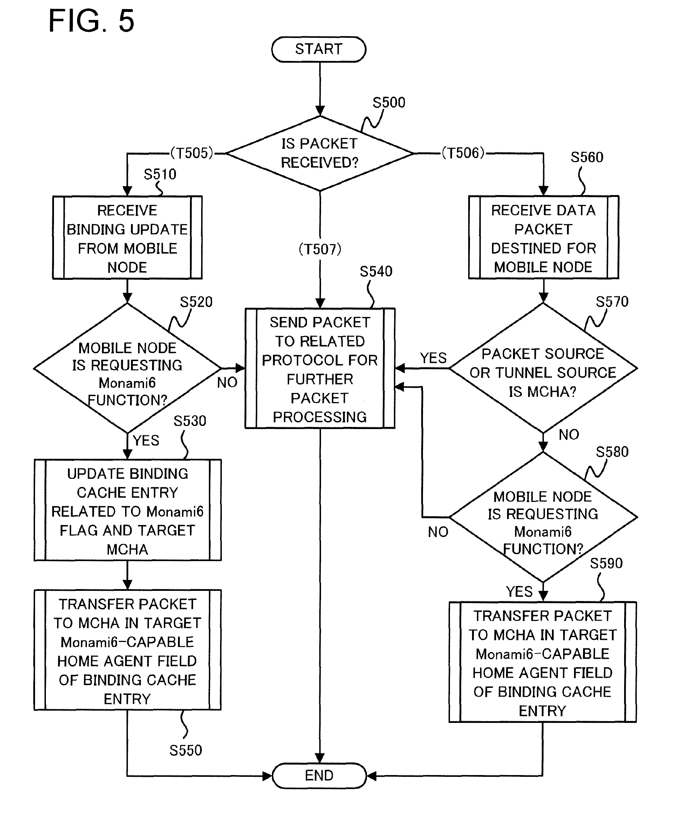

Fig. 5 is a flowchart of an example of operations performed by the MSHA according to the embodiment of the present invention. In Fig. 5, when the MSHA receives a packet, first, the MSHA determines the packet type of the message (Step S500). Here, when the received packet is a binding update from a mobile node (Transition T505), when the received packet is a data packet destined for the mobile node (Transition T506), and when the received packet is another type of packet (Transition T507) will be described.

When the received message is the binding update from the mobile node (Transition T505, Step S510), the MSHA checks whether the mobile node is requesting the Monami6 function (Step S520). The MSHA can perform the check by an arbitrary method, such as by making a query to the mobile node, the information service 340, or another MCHA.

When the mobile node is requesting the Monami6 function at Step S520, the MSHA sets the Monami6 flag field 200 and the target Monami6-capable home agent field 210, and updates the binding cache entry of the mobile node (Step S530). The MSHA then performs a process for transferring the packet including the message to the MCHA written in the target Monami6-capable home agent field 210 (Step S550).

On the other hand, when the mobile node is not requesting the Monami6 function at Step S520, the MSHA sends the packet to the related protocol stack, and further processing related to the protocol is performed (Step S540).

When the MSHA receives the data packet destined for the mobile node (Transition T506, Step S560), first, the MSHA checks whether the packet transmitting source or the tunnel transmission source is an MCHA (Step S570). When the packet transmitting source or the tunnel transmission source is the MCHA at Step S570, the MSHA sends the packet to the related protocol stack, and further processing related to the protocol is performed (Step S540).

However, when the packet transmitting source or the tunnel transmission source is not an MCHA at Step S570, the MSHA checks the binding cache entry of the mobile node and determines whether the mobile node is requesting the Monami6 function (Step S580). When information stating that the mobile node is requesting the Monami6 function is set in the Monami6 flag field 200, the MSHA transfers the packet to the MCHA written in the target Monami6-capable home agent field 210 of the binding cache entry (Step S590).

In the other hand, when the Monami6 flag field 200 is not set (in other words, the mobile node is not requesting the Monami6 function), the MSHA sends the packet to the related protocol stack, and further processing related to the protocol is performed (Step S540). In addition, when the packet received by the MSHA is another type of packet, as well, the MSHA sends the packet to the related protocol stack, and further processing related to the protocol is performed (Step S540).

According to another preferred embodiment differing from the above-described embodiment, an instance can be considered in which the MSHA does not implement the Monami6 protocol stack but can understand flow filtering protocol. Optimization in the overlay network can be actualized in this instance as well.

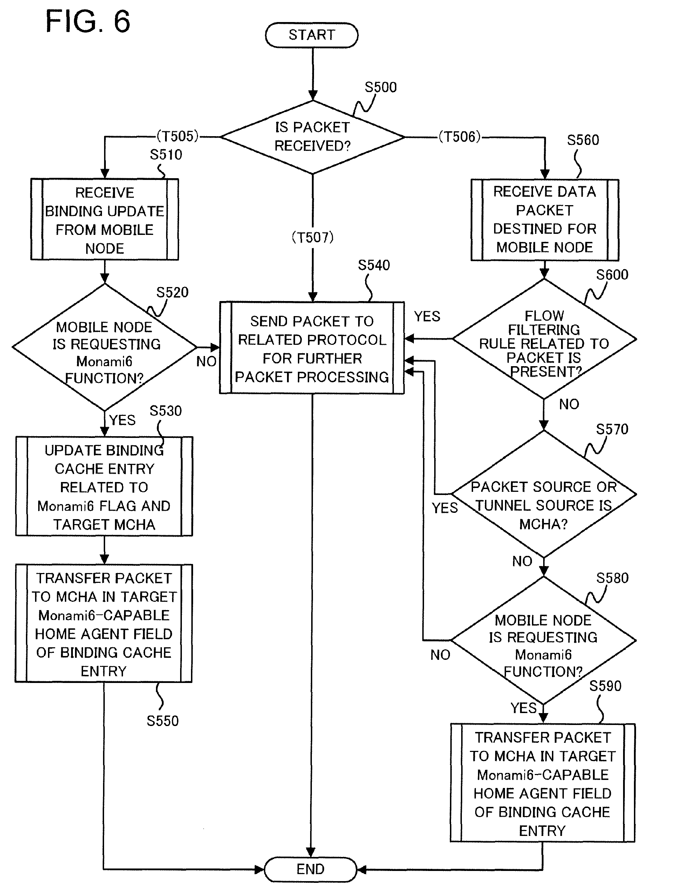

Fig. 6 is a flowchart of an example of operations performed by the MSHA according to another embodiment of the present invention.
Fig. 6 shows an example of operations performed by an MSHA that does not implement the Monami6 protocol stack but can understand the flow filtering protocol. When the MSHA 150 shown in Fig. 1 is the MSHA performing the operation in Fig. 6 will be described as an example, below.

It is assumed that, in the network configuration shown in Fig. 1, the MN 110 requests an operation adhering to a flow filtering rule prescribing that a data packet from the CN 190 is transmitted via the path 112. When the MSHA 150 receives the data packet destined for the MN 110 from the CN 190 (Step S500, Transition T506, Step S560), the MSHA 150 checks whether there is a flow filtering rule corresponding to the data packet (Step S600).

When the flow filtering rule is present at Step S600, the MSHA 150 sends the packet to a related protocol (in this instance, the flow filtering protocol), and further processing is performed (Step S540).

However, when a corresponding flow filtering rule is not found at Step S600, the MSHA 150 checks whether the packet transmitting source or the tunnel transmission source of the packet is an MCHA.
Other operations shown in Fig. 6 are basically the same as those shown in Fig. 5. Explanations thereof are omitted.

When the checking operation added to the operation in Fig. 6 is performed, there is an advantage in that the MSHA is not required to transfer the MCHA when the data packet is related to flow filtering. As a result, unnecessary waiting time and wasteful consumption of bandwidth can be prevented.

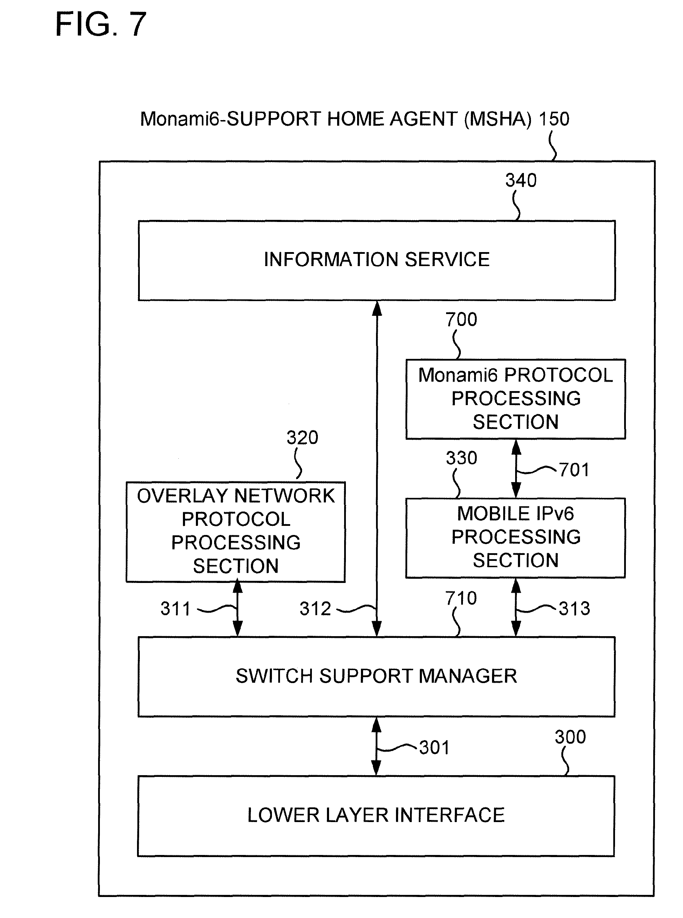

In still another preferred embodiment, an instance can be considered in which the MSHA 150 includes a Monami6 protocol processing section 700 that is the Monami6 protocol stack, as shown in Fig. 7. In the configuration shown in Fig. 7, the Monami6 protocol processing section 700 is disposed above the mobile IPv6 processing section 330. However, the basic concept of the present invention applies regardless of where the Monami6 protocol processing section 700 is disposed.

It is thought that a configuration in which the Monami6 protocol processing section 700 merely is provided will be the same as the configuration of the MCHA that implements the Monami6 function. However, a service provider may require an option for dynamically validating and invalidating the Monami6 service. The configuration shown in Fig. 7 allows the option to be realized. Therefore, a switch support manager 710 is provided in place of the support manager 310 (see Fig. 3). The switch support manager 710 provides a function for switching the valid and invalid states of the operation of the Monami6 function, in addition to all functions of the support manager 310. The valid and invalid states of the operation of the Monami6 function can be dynamically switched accordingly, based on an arbitrary policy.

The MSHA 150 shown in Fig. 7 can be referred to as an "MSHA" when the operation of the Monami6 function is invalid. However, when the operation of the Monami6 function is valid, the MSHA is configured to fully implement Monami6 (in other words, becomes an MCHA) and cannot be referred to as an "MSHA". However, to simplify explanation, a HA configured as shown in Fig. 7 will be referred to as an MSHA hereafter, in relation to the MCHA in which the operation of the Monami6 function is always valid.

An overlay network system including the MSHA 150 shown in Fig. 7 will be described below. In the overlay network system including the MSHA 150 shown in Fig. 7, for example, whether the operation state of the Monami6 function in the MSHA 150 is valid or invalid is merely required to be known in the overall overlay network system. To actualize this, a global list is merely required to be provided in which overlay network nodes in which the Monami6 function is currently operating are written. The global list can be managed by a central information service that performs centralized management of information in the overall overlay network system. Alternatively, a global list can be respectively managed by all nodes in the overlay network.

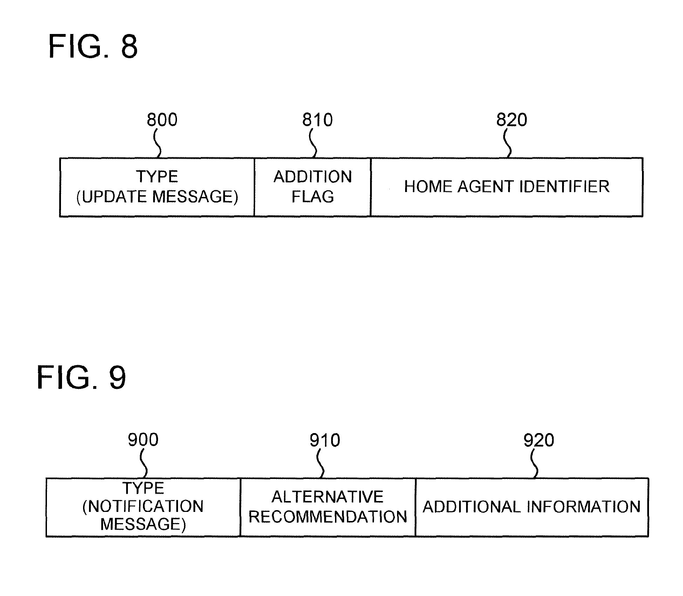

Fig. 8 is a diagram of an update message used to update the global list in which all overlay network nodes in which the Monami6 function is currently operating are written. The update message for updating the global list can be transmitted to the central information service or can be broadcast to all nodes within the overlay network.

The update message shown in Fig. 8 is an example. Changes can be made accordingly based on the system being used and implementation conditions. The update message can be integrated by a message of a pre-existing protocol, such as mobile IP or Internet Control and Management Protocol (ICMP), or can be rewritten.

The update message shown in Fig. 8 has a type field 800, an addition flag field 810, and a home agent identifier field 820.

In Fig. 8, the type field 800 is used to enable the message to be identified as an update message. A value comprehensible to both the transmitting node and the receiving node is set in the type field 800. The addition flag field 810 is used to indicate that the transmitting node of the update message is requesting that the transmitting node itself be added to the global list as an MCHA or removed from the global list. The home agent identifier field 820 includes a home agent identifier, address information, and the like for identifying the overlay network node (the MSHA 150 itself) that should be added to or removed from the global list.

When the switch support manager 710 receives an instruction to switch the MSHA 150 from the Monami6 valid state to the Monami6 invalid state to remove the MSHA 150 itself from the global list of overlay network nodes in which the Monami6 function is currently operating, first, the switch support manager 710 transmits an update message requesting removal from the global list. The removal from the global list resulting from the transmission of the update message is promptly and accurately performed in the overlay system network.

In addition, the MSHA 150 is required to check all entries included in the binding cache related to the mobile node requesting the Monami6 function, and add an appropriate value in the Monami6 flag field 200 and the target Monami6-capable home agent field 210, such as enabling the packet of the mobile node requesting the Monami6 function to be transferred to the appropriate MCHA. As a result, the Monami6 service can be seamlessly invalidated.

On the other hand, when the switch support manager 710 receives an instruction to switch the MSHA 150 from the Monami6 invalid state to the Monami6 valid state, the switch support manager 710 is first required to identify whether mobile nodes managed by the home agent are requesting the Monami6 function. This is actualized by the switch support manager 710 checking the binding cache entries of all mobile nodes in which the Monami6 flag field 200 is set.

Then, when the mobile nodes requesting the Monami6 function are identified, the switch support manager 710 writes information stating that the MSHA 150 itself, rather than, for example, another MCHA, will process the packet in the entries related to the mobile nodes. The binding cache entry can be updated by awaiting a normal periodic update. Alternatively, the update can be performed by an entity of the information service 340. Information that can be obtained from the entity of the information service 340 varies depending on a query/response mechanism. When all related entries are updated, the switch support manager 710 transmits the update message shown in Fig. 8 to the global network 100, and adds the MSHA 150 itself to the global list. As a result, the Monami6 service can be seamlessly validated.

In addition to collectively setting the valid and invalid states of the Monami6 service for all MN registrations managed by the MSHA, the switching operation can, in part, validate the Monami6 service for some MN registrations and invalidate the Monami6 service for other MN registrations. When the registration area for the plurality of care-of addresses and flow management become enlarged in the MSHA, the MSHA requests other MCHA to manage excess processing load. The switching operation for partially validating the Monami6 service serves to prevent the processing load of the MSHA itself from suddenly reaching a processing limit on the receiving MCHA side.

According to each embodiment of the present invention described above, the operation of the present invention is actualized by functions being added to devices disposed on the network (primarily the MSHA). However, the operation of the present invention can be seamlessly performed by further extension of the functions of the mobile node.

In Fig. 1, the mobile node transmits a binding update message for registering a plurality of care-of addresses. The binding update message is intercepted by the MSHA. At this time, in addition to the above described operations (see Fig. 5), the MSHA can perform an additional operation in which the MSHA determines whether the mobile node is receiving the Monami6 service on an optimal interface (for example, when the packet is once transferred to an MCHA because the interface is connected to the MSHA rather than the MCHA). When the optimal interface is not being used, the MSHA transmits a notification message to the mobile node giving notification that the interface is not optimal.

The mobile node has an expanded function for understanding the notification message when the notification message is received and discovers that the Monami6 service is not being received using an optimal interface. When the mobile node discovers that the Monami6 service is not being received using the optimal interface through the notification message, the mobile node can select another network (another interface) and request the Monami6 service. The request can be made by transmission of a binding update message for registering a plurality of care-of addresses (retransmitted from another interface). Alternatively, the mobile node can transmit a request clearly stating that the mobile node wants the Monami6 service provided in an optimal state.

The MSHA can use arbitrary judging criteria as a transmitting trigger for the notification message. The MSHA can transmit the notification message to an arbitrary mobile node. For example, an administrator of the MSHA can set a policy in advance. The MSHA can transmit the notification message based on the policy.

Before transmission of the notification message is decided, the MSHA can check the registration of the plurality of care-of addresses of the mobile node and check whether an alternative domain (optimal network) to which connection can be switched is present.
At this time, for example, the support manager 310 can make a query to a local or remote information service 340 to obtain required information. The support manager 310 can also make a query to the information service 340 related to the MCHA suitable for the mobile node. In this instance, the MCHA provided in response to the query may differ from the MCHA written in the target Monami6-capable home agent field 210.

The support manager 310 of the MSHA can send recommendation information indicating the interface that should be used when the mobile node transmits the binding update message, by a notification message.

When a process for authentication, authorization, and accounting (AAA) is performed when the mobile node connects to the network, the MSHA can ask about the registration method for the plurality of care-of addresses desired by the mobile node. In this instance, the MSHA can immediately transmit the notification message and notify the mobile node that the Monami6 service in this network is not in an optimal state. As a result, the mobile node can immediately switch to another network, as required, without transmitting the binding update message.

Fig. 9 is a diagram of the notification message transmitted from the MSHA to the mobile node. The notification message shown in Fig. 9 is an example. Changes can be made accordingly based on the system being used and implementation conditions.

The notification message shown in Fig. 9 is used to notify the mobile node that the Monami6 service is not optimal on the interface by which the notification message is received.

The notification message shown in Fig. 9 includes a type field 900, an alternative recommendation field 910, and an additional information field 920.

In Fig. 9, the type field 900 is used to enable the message to be identified as a notification message. A value comprehensible to both the transmitting node and the receiving node is set in the type field 900. The alternative recommendation field 910 can indicate an alternative interface that should be used for optimal Monami6 service. Additional information enabling the mobile node to receive better Monami6 service can be included in the additional information field 920. For example, various pieces of information can be used as additional information inserted into the additional information field 920, such as the type of network interface by which the MCHA can be found, and global positioning system (GPS) positional information and address information of the MCHA present nearest to the mobile node.

The notification message can also be carried in a form of a mobility option inserted into a binding acknowledgment message returned in response to a binding update message. In this instance, the type field 900 of the notification message has a value of an 8-bit option type identifier and a value of an 8-bit option length. The alternative recommendation field 910 includes the care-of address of the interface on the mobile node that should be used to transmit the registration for the plurality of care-of addresses. The care-of address of other interfaces on the mobile node that can be used can be included in the additional information field 920.

The notification message can be carried by a lower layer function, such as a media independent handover function (MIHF) allowing handover between different types of networks, prescribed by IEEE 802.21. In this instance, the notification message can be transmitted in a form of an event or a command based on each service prescribed by IEEE 801.21. For example, a link detection event and an MIH switch command can be given as examples of a format in which the notification message is carried. In this instance, a value of a certain identifier in the layer 2 of the interface, such as IEEE MAC ID, is inserted in the alternative recommendation field 910.

The notification message can also be carried in an application layer. In this instance, the mobile node or the MSHA runs customized software allowing the value in each information field within the notification message to be communicated by an appropriate method.

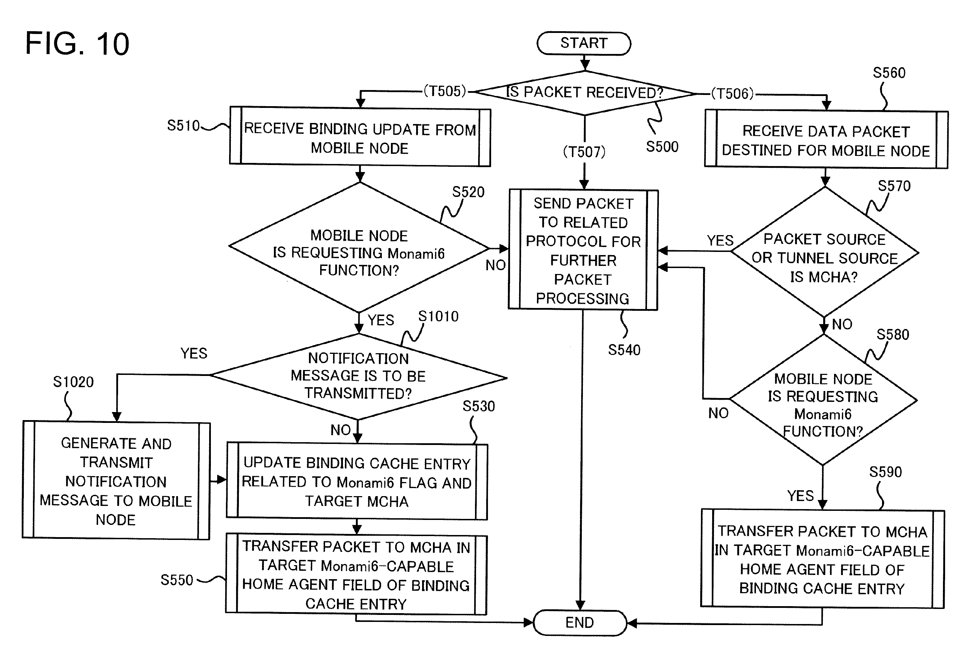

Fig. 10 is a flowchart of an example of operations performed when the notification message from the MSHA is used, according to still further another embodiment of the present invention. As a comparison between the flowchart shown in Fig. 5 and the flowchart shown in Fig. 10 clearly shows, only two steps, Step S1010 and Step S1020, are added in the operations in the flowchart shown in Fig. 10, in relation to the operation in the flowchart shown in Fig. 5. Hereafter, the steps added in the operation in the flowchart shown in Fig. 10 will mainly be described.

When the mobile node is requesting the Monami6 function at Step S520, the MSHA judges whether to transmit the notification message (Step S1010). Here, for example, the MSHA judges whether the mobile node is receiving the Monami6 service in an optimal state (such as through use of a suitable network interface). The judgment criteria for transmitting the notification message (transmission trigger) can be an arbitrary condition.

When transmission of the notification message is judged not to be required at Step S1010, the MSHA proceeds to Step S530. The MSHA sets the Monami6 flag field 200 and the target Monami6-capable home agent field 210, and updates the binding cache entry of the mobile node (Step S530).

On the other hand, when transmission of the notification message is judged to be required at Step S1010, the MSHA proceeds to Step S1020. Before updating the binding cache entry of the mobile node at Step S530, the MSHA generates the notification message for notifying the mobile node that the Monami6 service is not optimal using an appropriate method, and performs a process for transmitting the notification message to the mobile node.

The notification message to the mobile node can, in actuality, be transmitted from another entity within the global HAHA network (an arbitrary node belonging to the global HAHA network), instead of the MSHA. For example, as the MSHA transmitting the notification message to the mobile node, for example, a central entity holding knowledge related to network topology, or a primary home agent of the mobile node defined by global HAHA can be given. In this instance, the MSHA is required to notify the entity serving as the transmitting source of the notification message of required information (the mobile node identifier and registration data transmitted from the mobile node). The notification method can be arbitrary. However, for example, a message that is an extension of the notification message in Fig. 9 can be used.

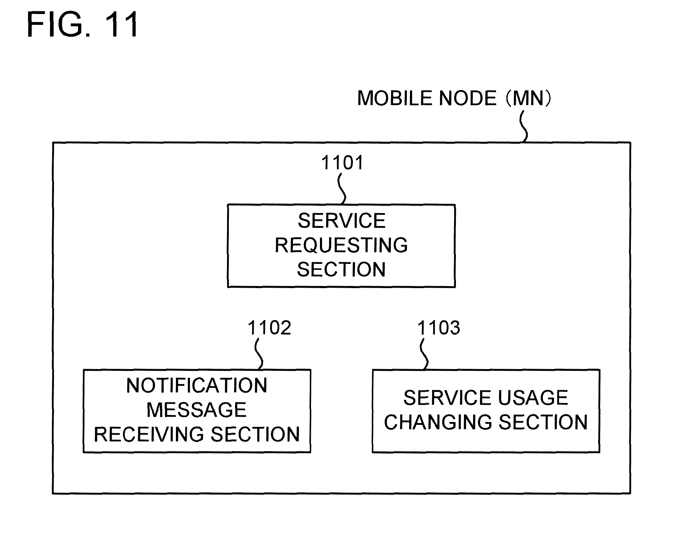

Fig. 11 is a schematic diagram of functions of the mobile node having the expanded functions of the present invention (mainly the added functions). The mobile node shown in Fig. 11 includes a service requesting section 1101, a notification message receiving section 1102, and a service usage changing section 1103. The service requesting section 1101 requests use of a function of the overlay network service, such as the Monami6 service, from the network. The notification message receiving section 1102 receives a notification message from the network giving notification that the overlay network service cannot be optimally received. The service usage changing section 110 changes the method by which the overlay network service is received when the notification message is received.

When the mobile node has a plurality of interfaces used to connect to the network, a service usage changing means can enable service to be received in a more suitable manner by switching the interface used to connect to the network. When information used to enable the mobile node to receive appropriate overlay network service is included in the alternative recommendation field 910 and the additional information field 920 of the notification message, the service usage changing means can switch the interface used to connect to the network based on the information.

The operation performed by the MSHA to set the target MCHA serving as the transfer destination can be supplemented by a notification being given to the nodes within the overlay network that the mobile node is connected to the MSHA. In this instance, as a result of the mobile node being notified that optimal service use cannot be achieved through the MSHA, the mobile node transmits a service request. The service request preferably includes information specifying the MSHA desired by the mobile node to set the target MCHA. The service request can be transmitted to a central entity or a primary home agent that can be known by transmission from an interface connected to the MCHA (if such an interface is present) or another method (such as a name service, an information service, or a pre-setting). Notification of the service request can also be given using a message of a lower layer. As a result of the notification, the other nodes within the overlay network can more easily know which MSHA within the overlay network requires a target MCHA for which mobile node.

In the present specification, the present invention is illustrated and described taking care to give the most practical and most preferable embodiments. However, it is clear to a person skilled in the art that various modifications can be made without departing from the scope of the invention. For example, in details of the parameters and design of the support manager 310 and other constituent elements, the Monami6 function and the flow filtering function can be replaced with a Quality of Service guarantee function, and the like.

In the present specifications, descriptions are given under an assumption that the mobile node has a plurality of network interfaces. However, all that is required is a plurality of logical interfaces for achieving the present invention. For example, the mobile node can be configured such that a network section can operate as if the mobile node is connected to the network by a plurality of interfaces, for example, by a single wireless section being shared among a plurality of connection systems, and the connection systems being switched at a speed at which the change does not cause problems from the perspective of a network interface, or by a logical link being maintained in the layer 2.

According to the above-described embodiments, it is assumed that the overlay network has a global configuration. However, the present invention can also be applied to a local mobility management environment. For example, proxy mobile IP (PMIP) that is a local mobility management method provides a mobile terminal with mobility support by a mobile access gateway (MAG) registering movement of the mobile terminal to a local mobility anchor (LMA). The present invention can be applied such that the MCHA and the MSHA in the present specification correspond with the MAG. In this instance, another home agent that receives registration information from a home agent that is a starting point of the movement of the mobile node (various instances are possible, such as based on a certain point in time [relative], or a state of registration to a network operator [definitive]) or a home agent that is the connection destination of the mobile node can be considered corresponding with the LMA.

Each functional block used in the explanations of the embodiments of the present invention, described above, can be actualized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI.

The method of forming the integrated circuit is not limited to LSI and can be actualized by a dedicated circuit or a general-purpose processor. A field programmable gate array (FPGA) that can be programmed or a reconfigurable processor of which connections and settings of the circuit cells within the LSI can be reconfigured can be used after LSI manufacturing.

Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

The present invention achieves an effect in which a certain service desired by a mobile node can be appropriately provided, even in an environment including overlay network nodes providing different functions, such as where different internet service providers cooperate to form an overlay network. The present invention can be used in a technical field related to an overlay network that abstracts a packet exchange type data communication network, such as an IP network. The present invention can also be applied to flow filtering technology and technology related to Monami6.

## Claims

1. An overlay network node belonging to an overlay network formed on top of a predetermined network and providing a function related to a certain overlay network service, the overlay network node comprising:
an identifying means for identifying a mobile node desiring a service not supported by the overlay network node; and
a transferring means for transferring, to enable a certain overlay network node supporting the service desired by the mobile node to provide the mobile node with the service, information from the mobile node requesting the service and a data packet destined for the mobile node to the certain overlay network node supporting the service.

2. The overlay network node according to claim 1, wherein the service desired by the mobile node is any of registration of a plurality of care-of addresses, registration of a flow filtering rule, and an operation based on Monami6 protocol.

3. The overlay network node according to claim 1, comprising:
an information storage means for associating information related to the mobile node desiring the service stating that the mobile node desires the service with identifying information of the certain overlay network node, and storing the associated pieces of information.

4. The overlay network node according to claim 1, wherein, when a request for the service is directly received from the mobile node desiring the service, the transferring means transfers the request to the certain overlay network node.

5. The overlay network node according to claim 1, comprising:
a process judging means for judging, when a data packet destined for the mobile node desiring the service is received, whether the data packet has been processed by an arbitrary overlay network node supporting the service, wherein
when the data packet has been processed by an arbitrary overlay network node supporting the service, the transferring means transfers the data packet to the mobile node and, on the other hand, when the data packet has not been processed by an arbitrary overlay network node supporting the service, the transferring means transfers the data packet to the certain overlay network node.

6. The overlay network node according to claim 1, comprising:
a rule checking means for checking, when a data packet destined for the mobile node desiring the service is received, whether a flow filtering rule related to the data packet is present, wherein
when a flow filtering rule related to the data packet is present, the transferring means transfers the data packet based on the flow filtering rule.

7. An overlay network node belonging to an overlay network formed on top of a predetermined network and providing a function related to a certain overlay network service, the overlay network node comprising:
a service providing means for providing a certain service;
a service providing state switching means for switching between a state in which the certain service is provided and a state in which the certain service is not provided;
an identifying means for identifying a mobile node desiring the service; and
a transferring means for transferring, in the state in which the certain service is not provided, to enable a certain overlay network node supporting the service desired by the mobile node to provide the mobile node with the service, information from the mobile node requesting the service and a data packet destined for the mobile node to the certain overlay network node supporting the service.

8. The overlay network node according to claim 7, comprising:
a list updating means for updating, when the service providing state switching means switches the state, a list of overlay network nodes supporting the service, shared within the overlay network, in adherence to the switching of the state.

9. The overlay network node according to claim 8, wherein the list updating means transmits an update message indicating that the overlay network node is to be added to or removed from the list, in adherence to the switching of the state.

10. The overlay network node according to claim 1, comprising:
a service judging means for judging whether the mobile node can appropriately receive the service;
a notification message generating means for generating, when the service judging means judges that the service cannot be appropriately received, a notification message indicating that the mobile node cannot appropriately receive the service; and
a notification message transmitting means for transmitting the notification message to the mobile node.

11. The overlay network node according to claim 1, wherein the notification message generating section inserts information used to enable the mobile node to appropriately receive the service into the notification message.

12. A mobile node that is connected to a network and performs communication using a function related to a certain overlay network service provided by an overlay network formed on top of the network, the mobile node comprising:
a service requesting means for making a request to the network for use of the function related to the certain overlay network service;
a notification message receiving means for receiving a notification message from the network stating that the overlay network service cannot be appropriately received; and
a service usage changing means for changing a method by which the overlay network service is received when the notification message is received.

13. The mobile node according to claim 12, comprising:
a plurality of interfaces used to connect to the network, wherein
the service usage changing means switches the interface used to connect to the network.

14. The mobile node according to claim 13, wherein interface-type information is included in the notification message as information used to enable the overlay network service to be appropriately received, and the service usage changing means switches the interface used to connect to the network based on the interface-type information.
